# EUROPÄISCHE PATENTSCHRIFT

(11) **EP 3 564 523 B1**
(45) Veröffentlichungstag und Bekanntmachung des Hinweises auf die Patenterteilung: **23.08.2023**
(21) Anmeldenummer: 19170236.4
(22) Anmeldetag: 18.04.2019
(51) Int. Cl.: F03D 1/06

(54) **FLANSCHANSCHLUSS FÜR EIN WINDENERGIEANLAGENROTORBLATT, VERSTEIFUNGSLAGE FÜR EINEN FLANSCHANSCHLUSS, FLANSCHEINLEGER, WINDENERGIEANLAGENROTORBLATT, WINDENERGIEANLAGE SOWIE VERFAHREN ZUM HERSTELLEN EINES FLANSCHANSCHLUSSES**
FLANGE FITTING FOR A WIND ENERGY ASSEMBLY ROTOR BLADE, REINFORCEMENT LAYER FOR A FLANGE FITTING, FLANGE INSERTER, WIND ENERGY ASSEMBLY ROTOR BLADE, WIND TURBINE AND METHOD FOR PRODUCING A FLANGE FITTING
RACCORDEMENT À BRIDE POUR UNE PALE DE ROTOR D'ÉOLIENNE, BASE DE RAIDISSEMENT POUR UN RACCORDEMENT À BRIDE, INSERT DE BRIDE, PALE DE ROTOR D'ÉOLIENNE, ÉOLIENNE AINSI QUE PROCÉDÉ DE FABRICATION D'UN RACCORDEMENT À BRIDE

(30) Priorität: 03.05.2018 DE 102018110604
(43) Veröffentlichungstag der Anmeldung: 06.11.2019
(73) Patentinhaber: Nordex Energy SE & Co. KG, 22419 Hamburg (DE); Nordex Blade Technology Centre ApS, 5771 Stenstrup (DK)
(72) Erfinder: Block, Tim Berend, 24558 Henstedt-Ulzburg (DE); Hornemann, Jesper, 5792 Aarslev (DK)
(74) Vertreter: Epping - Hermann - Fischer

(56) Entgegenhaltungen:
- EP-A1- 3 121 441
- WO-A2-2014/041151
- US-A1- 2010 098 552

## Beschreibung

Die Erfindung betrifft einen Flanschanschluss für ein Windenergieanlagenrotorblatt, eine Versteifungslage für einen Flanschanschluss eines Windenergieanlagenrotorblatts, einen Flanscheinleger, ein Windenergieanlagenrotorblatt, eine Windenergieanlage sowie ein Verfahren zum Herstellen eines Flanschanschlusses.

Windenergieanlagen mit Windenergieanlagenrotorblättern sind aus dem Stand der Technik vielfach bekannt und werden verwendet, um Windenergie in elektrische Energie umzuwandeln. Im Bereich einer Rotorblattwurzel weisen die Rotorblätter einen Rotorblattanschluss mit einer Vielzahl von in das Laminat integrierten Hülsen auf, über welche die Rotorblätter mittels Befestigungsschrauben bzw. Befestigungsschraubbolzen mit einem Lagerring eines sogenannten Pitchlagers oder mit einem mit dem Lagerring verbundenen Bauteil wie z.B. einem Extender der Windenergieanlage verbunden werden. Die Hülsen können Teil eines Flanscheinlegers für den Rotorblattanschluss sein. Ein derartiger Aufbau ist beispielsweise aus der internationalen Anmeldung WO 2015/124568 A1 bekannt.

Weiterhin betreffen die EP 3 121 441 A1 und die WO 2014/041151 A2 Rotorblattwurzelbaugruppen für eine Windkraftanlage, wobei eine Vielzahl von Wurzelinserts über den Umfang des Rotorblatts im Bereich der Wurzel verteilt angeordnet sind. Die US 2010/098552 A1 betrifft Blattverlängerungsvorrichtungen, die zwischen der Blattwurzel der Windturbine und dem Blattlager oder der Nabe angeordnet sind, wodurch die Überstreichungsfläche der Blätter vergrößert und die Energieproduktion erhöht wird.

Alternativ finden Hülsen auch bei der Verbindung von Rotorblattsegmenten Verwendung, die, der Länge nach angeordnet und zusammengefügt, ein Rotorblatt bilden. Die Hülsen befinden sich dann im Laminat eines Teilungsflansches der Rotorblattsegmente. Die Rotorblattsegmente werden über die Hülsen mittels Schraubbolzen direkt oder über geeignete Zwischenstücke miteinander verbunden.

Eine Aufgabe, die der Erfindung zugrunde liegt, ist es, ein Konzept für einen Flanschanschluss anzugeben, welches eine hohe Festigkeit und besonders viel Bauraum für Laminate ermöglicht.

Gemäß einem Aspekt wird ein Flanschanschluss für ein Windenergieanlagenrotorblatt offenbart. Der Flanschanschluss weist eine äußere Laminatlage auf, welche eine äußere Oberfläche des Flanschanschlusses ausbildet. Der Flanschanschluss weist eine innere Laminatlage auf, welche eine innere Oberfläche des Flanschanschlusses ausbildet. Der Flanschanschluss weist eine zwischen der äußeren und der inneren Laminatlage angeordnete Versteifungslage auf. Die Versteifungslage ist durch einzelne, längliche Profile aus einem formstabilen Material gebildet, die entlang der äußeren Laminatlage nebeneinander und beabstandet zueinander an der äußeren Laminatlage angeordnet sind. Jeweils zwei nebeneinander angeordnete längliche Profile bilden einen Aufnahmebereich zwischen sich aus. Der Flanschanschluss weist mehrere Hülsen mit Innengewinde auf, die jeweils von einer weiteren Laminatlage umgeben sind, wobei jede Hülse in einem Aufnahmebereich zwischen zwei länglichen Profilen angeordnet ist, so dass die weitere Laminatlage jeder Hülse mit der äußeren zumindest teilweise in Kontakt steht. Jedes längliche Profil ragt ausgehend von der äußeren Laminatlage in Richtung der inneren Laminatlage nicht über eine Ebene hinaus, die durch zwei Längsachsen zweier dem jeweiligen Profil unmittelbar benachbarten Hülsen aufgespannt wird.

Gemäß einem weiteren Aspekt wird ein analog aufgebauter Flanschanschluss offenbart, bei welchem im Unterschied zum oben beschriebenen Flanschanschluss die Versteifungslage nicht an der äußeren, sondern an der inneren Laminatlage angeordnet ist. Dabei ragt jedes längliche Profil ausgehend von der inneren Laminatlage in Richtung der äußeren Laminatlage nicht über eine Ebene hinaus, die durch zwei Längsachsen zweier dem jeweiligen Profil unmittelbar benachbarten Hülsen aufgespannt wird.

Die beschriebenen Flanschanschlüsse zeichnen sich durch einen besonders kompakten und festen, insbesondere druck- und biegesteifen Aufbau aus, wobei insbesondere besonders viel Raum für Laminat bzw. Laminatlagen im Flanschanschluss geschaffen ist. Dabei ist die Versteifungslage nicht durch eine einstückige Lage aus einem Material gebildet, welche bezogen auf einen Querschnitt des Flanschanschlusses entlang des gesamten Umfangs des Flanschanschlusses umläuft, sondern ist in einzelne, längliche Profile aufgeteilt. Dadurch sinkt die Materialstärke im Vergleich zu einer einstückigen Variante erheblich und schafft zusätzlichen Bauraum zwischen den Profilen und - je nach Ausführungsform der obigen Flanschanschlüsse - insbesondere zwischen äußerer Laminatlage und Hülsen bzw. innerer Laminatlage und Hülsen. Ein weiterer Vorteil besteht darin, dass sich die innere Laminatlage und das die Hülsen umgebende Laminat bzw. die äußere Laminatlage und das die Hülsen umgebende Laminat zumindest teilweise kontaktieren, so dass die in Kontakt stehenden Laminatlagen bei der letztlichen Fertigung des Flanschanschlusses, etwa bei der Vakuuminfusion, fest und direkt miteinander verbunden werden. Im Vergleich zu einem Aufbau mit einstückig umlaufenden Versteifungslagen, bei welchem die Laminatlagen der Hülsen von der inneren bzw. äußeren Laminatlage getrennt sind, kann bei dem erfindungsgemäßen Flanschanschluss eine sichere Durchtränkung aller Laminatlagen gewährleistet werden. Die erfindungsgemäßen Flanschanschlüsse sind dadurch besonders fest und steif aufgebaut.

Weiter kann die Auszugsfestigkeit der Hülse durch die in dem zusätzlich gewonnenen Bauraum eingesetzten Laminate und sich daraus ergebende höhere Steifigkeit verbessert werden.

Weiterhin tragen die beschriebenen Flanschanschlüsse durch die Vermeidung von Bereichen mit einem dünnen Querschnitt innerhalb der Versteifungslage dazu bei, dass die Versteifungslage wesentlich geringere Schublasten zwischen Hülsen und dem Außenlaminat übertragen muss und dadurch auf eine im Herstellungsprozess benötigte Funktion reduziert werden kann. Hinzu kommt bei einer mehrteiligen Ausführung der Versteifungslage der Vorteil, dass in hochbelasteten Bereichen des Flansches für die Versteifungslagen ein höher tragfähiges Material eingesetzt werden kann, während in weniger belasteten Bereichen weiterhin kostengünstigere und leichtere Materialien zum Einsatz kommen. Insofern bietet die mehrteilige Ausführung einerseits ein größeres Optimierungspotential als die einteilige Ausführung, andererseits eine höhere Tragfähigkeit wie auch die Möglichkeit einer weiteren Steigerung der Tragfähigkeit.

Bei Verwendung der Versteifungslage an der Innenseite des Flanschanschlusses ergibt sich als Vorteil einerseits eine Erhöhung der Biegesteifigkeit des Flanschanschlusses im Bereich der Hülsen, andererseits die Erzeugung einer flachen inneren Oberfläche auf den Hülsen. Dies erlaubt eine vereinfachte Ablage der inneren Laminatlagen, welche die Innenschale bilden sowie nach der Fertigstellung des Windenergieanlagenrotorblatts eine bessere Anbindung weiterer Bauteile wie z.B. in das Rotorblatt integrierte Bodenplatten, Sensoren oder Mittel für eine 0°-Positionierung z.B. durch Klebprozesse.

Neben dem Blattanschluss sind die offenbarten Flanschanschlüsse auch bei geteilten Rotorblättern, den eingangs erwähnten Rotorblattsegmenten einsetzbar.

Der Flanschanschluss ist beispielsweise Teil des fertigen Rotorblatts und ist durch bekannte Herstellungsverfahren, etwa Vakuuminfusion, gefertigt, so dass die oben erwähnten Komponenten miteinander fest und steif verbunden sind.

Unter einer Laminatlage wird ein Faserverbundwerkstoff in Form eines Gewebes oder Geleges mit einer oder mehreren Hauptfaserrichtungen verstanden.

Die länglichen Profile, welche die Versteifungslage bilden, bestehen aus einem unter Vakuumdruck formstabilen Material, welches als Gegenstück für das nicht ausgehärtete Laminat dient. Diese Profile haben typischerweise tragende Eigenschaften. Das formstabile Material kann beispielsweise ein Kernmaterial sein, bei welchem es sich um ein strukturelles Material ohne Fasern handelt, wie z.B. einen geschäumten Kunststoff. Alternativ kann das formstabile Material der Profile auch ein strukturell tragfähigeres festes Material mit einem vorbestimmten Faser-Volumen-Gehalt sein, wie z.B. Pultrudate aus glasfaser- oder kohlenstofffaserverstärktem Kunststoff. Dies erlaubt eine weitere Steigerung der Hülsenauszugsfestigkeiten gegenüber der Basisvariante mit einem Kernmaterial durch eine weitere Steigerung der Steifigkeit des die Hülsen umgebenden Laminats. Unter der Formulierung "tragende Eigenschaften" wird hier und im Folgenden verstanden, dass die Profile derart beschaffen sind, typische Lasten, die beim Betrieb von Windenergieanlagen auf die Rotorblätter wirken, aufnehmen zu können.

Die Versteifungslage dient der Aufnahme von Kräften, insbesondere Druck- und Biegekräften in einem bestimmungsgemäßen Betrieb des Flanschanschlusses, aber auch der Positionierung der Hülsen bei der Fertigung des Flanschanschlusses. Außerdem dient die Versteifungslage als Gegen- bzw. Druckstück für die Konsolidierung der an die Versteifungslage angrenzenden noch nicht ausgehärteten Laminatlagen.

Wie beschrieben ragt jedes längliche Profil ausgehend von der äußeren Laminatlage in Richtung der inneren Laminatlage bzw. von der inneren Laminatlage in Richtung der äußeren Laminatlage nicht über eine Ebene hinaus, die durch zwei Längsachsen zweier dem jeweiligen Profil unmittelbar benachbarten Hülsen aufgespannt wird. Dies trägt zu oben genannten Vorteilen und Funktionen bei, wobei insbesondere Bauraum für Laminatlagen geschaffen wird. In einer besonders vorteilhaften Ausgestaltung ist die Spitze der dreiecksförmigen Profile zwischen zwei Hülsen in einem Abstand von der Ebene angeordnet, der ausreichend groß ist, um einen Kontakt zwischen den weiteren Laminatlagen, die die Hülsen umgeben, bei der Vakuuminfusion des Flanschanschlusses zu ermöglichen. Gleichzeitig wird die Funktion der Profile als Positionierungshilfe nicht eingeschränkt.

Gemäß einer Ausführungsform stehen die weiteren Laminatlagen zweier benachbarter Hülsen miteinander in Kontakt. Analog zu oben wird dadurch zu einem besonders kompakten und steifen Verbund beigetragen.

Gemäß einer Ausführungsform ist zwischen zwei benachbarten Hülsen ein Abstandselement angeordnet. Dieses kann die Positionierung der Hülsen für die Fertigung begünstigen. Alternativ oder zusätzlich kann mittels solcher Abstandselemente beispielsweise eine Festigkeit und/oder (Biege-)Steifigkeit des Flanschanschlusses modifiziert werden. Das Abstandselement kann beispielsweise aus zylinderförmig aufgerollten Laminatlagen bestehen. Bei dieser Ausführung stehen die weiteren Laminatlagen zweier benachbarter Hülsen über das Laminat des Abstandselements miteinander in Kontakt und werden bei der Vakuuminfusion mit dem Abstandselement zu einem kompakten Bauteil verbunden.

Gemäß einer Ausführungsform ist jedes längliche Profil im Wesentlichen dreiecksförmig ausgebildet. Insbesondere weisen - auf einen Querschnitt bezogen - Spitzen der dreiecksförmigen Profile in Richtung eines Zwischenraumes zwischen zwei Hülsen, während die Profile mit einer diesen Spitzen gegenüber liegenden Seite, insb. einem Schenkel der Dreiecksform, an der inneren bzw. äußeren Laminatlage angeordnet sind. Durch die dreieckige Form wird zu einer effektiven Positionierungshilfe der Hülsen beigetragen.

Gemäß einer Ausführungsform sind die einer Hülse zugewandten Seiten jedes länglichen Profils gewölbt und damit einer Formgebung der entsprechenden Hülsen mit umgebender weiterer Laminatlage angepasst. Dies trägt zu oben genannten Vorteilen und Funktionen bei.

Gemäß einer Ausführungsform ist zwischen der inneren und der äußeren Laminatlage eine weitere Versteifungslage vorgesehen, die durch einzelne, längliche Profile aus formstabilem Material gebildet ist. Die länglichen Profile sind - je nach Variante des offenbarten Flanschanschlusses - entlang der jeweils anderen von innerer oder äußerer Laminatlage nebeneinander und beabstandet zueinander an der inneren bzw. äußeren Laminatlage angeordnet. D.h., ist die Versteifungslage an der äußeren Laminatlage angeordnet, so wird die weitere Versteifungslage an der inneren Laminatlage vorgesehen bzw. umgekehrt. Jeweils zwei nebeneinander angeordnete längliche Profile der weiteren Versteifungslage bilden einen Aufnahmebereich zwischen sich aus. Jede Hülse ist in einem Aufnahmebereich zwischen zwei länglichen Profilen der weiteren Versteifungslage angeordnet, so dass die weitere Laminatlage jeder Hülse mit der inneren bzw. äußeren Laminatlage zumindest teilweise in Kontakt steht. Dadurch werden die oben genannten Vorteile und Funktionen weiter begünstigt.

Die beschriebenen Weiterbildungen gelten analog auch für die weitere Versteifungslage.

Gemäß einer Ausführungsform sind die länglichen Profile der Versteifungslage und/oder der weiteren Versteifungslage mittels ein oder mehrerer Verbindungsmittel, die ein zu dem länglichen Profil unterschiedliches Material aufweisen, miteinander verbunden, insbesondere flexibel verbunden. Beispielsweise wird Gitterklebeband zum Verbinden der Profile verwendet, welches sich besonders vorteilhaft erweist, da dieses lediglich auf die Profile aufgeklebt werden muss und diese als einheitliche Lage zusammenhält. Zudem eignet sich Gitterklebeband für die finale Herstellung des Flanschanschlusses, etwa für die Infusion mit Harz. Ähnlich eignet sich ein trockenes Gewebe, welches mechanisch mit den einzelnen Profilen, etwa mittels Tackern unter Verwendung von Metall- oder Kunststoffklammern, verbunden wird. Dies erlaubt den Aufbau einer vollständigen, zusammengehörigen Versteifungslage in Form eines "Profil-Kits", die einstückig oder als ein Teil in eine Form für die Herstellung des Flanschanschlusses gelegt werden kann. Zudem werden definierte Abstände zwischen den Profilen gewährleistet. Es sind generell alle mit einem Faserverbundaufbau kompatiblen Materialien denkbar wie z.B. Gelege, Gewebe oder Matten aus Glas- oder Kunststofffasern. Die Fixierung kann chemisch durch Kleben, bevorzugt aber mechanisch durch Klammern bzw. Tackern erfolgen.

Gemäß einem weiteren Aspekt wird eine Versteifungslage für einen Flanschanschluss eines Windenergieanlagenrotorblatts offenbart. Die Versteifungslage ist durch einzelne, längliche Profile aus formstabilem Material gebildet, die nebeneinander und beabstandet zueinander angeordnet sind. Die länglichen Profile sind mittels ein oder mehrerer Verbindungsmittel, die ein zu dem Material des länglichen Profils unterschiedliches Material aufweisen können, miteinander verbunden. Jeweils zwei nebeneinander angeordnete längliche Profile bilden einen Aufnahmebereich zwischen sich aus, in welchen Hülsen mit Innengewinde anordenbar sind.

Die Versteifungslage trägt zu den oben genannten Vorteilen und Funktionen bei. Insbesondere lässt sich die Versteifungslage, die aus einzelnen Profilen aufgebaut ist, als Ganzes in eine Form zur Herstellung eines Flanschanschlusses einlegen. Die Versteifungslage kann entsprechend obiger Ausführungen weiter ausgebildet sein.

Gemäß einem weiteren Aspekt wird ein Flanscheinleger für ein Windenergieanlagenrotorblatt offenbart, der einen Flanschanschluss einer zuvor beschriebenen Ausführungsform aufweist. Ein solcher Flanscheinleger kann für die Herstellung eines Rotorblatts verwendet werden und wird als Ganzes in eine entsprechende Fertigungsform eingelegt.

Gemäß einem weiteren Aspekt wird ein Windenergieanlagenrotorblatt offenbart, welches einen Rotorblattanschluss mit einem Flanschanschluss oder einem Flanscheinleger einer zuvor beschriebenen Ausführungsform aufweist.

Gemäß einem weiteren Aspekt wird ein Windenergieanlagenrotorblatt offenbart, welches ein Rotorblattsegment mit einem Flanschanschluss oder einem Flanscheinleger einer zuvor beschriebenen Ausführungsform aufweist.

Gemäß einem weiteren Aspekt wird eine Windenergieanlage offenbart, die einen Rotor mit einem oder mehreren Windenergieanlagenrotorblättern einer zuvor beschriebenen Ausführungsform aufweist.

Die Rotorblätter bzw. die Windenergieanlage der weiteren Aspekte ermöglichen im Wesentlichen die oben genannten Vorteile und Funktionen und können jeweils entsprechend obiger Ausführungen weitergebildet sein.

Gemäß einem weiteren Aspekt wird ein Verfahren zum Herstellen eines Flanschanschlusses eines Windenergieanlagenrotorblatts offenbart. Das Verfahren weist die Schritte auf:
- Einlegen einer äußeren Laminatlage des Flanschanschlusses in eine Fertigungsform für den Flanschanschluss,
- Einlegen einer Versteifungslage auf die äußere Laminatlage in die Fertigungsform, wobei die Versteifungslage durch einzelne, längliche Profile aus formstabilem Material gebildet ist, die entlang der äußeren Laminatlage nebeneinander und beabstandet zueinander auf der äußeren Laminatlage angeordnet sind, wobei jeweils zwei nebeneinander angeordnete längliche Profile einen Aufnahmebereich zwischen sich ausbilden,
- Einlegen von Hülsen mit Innengewinde, die jeweils von einer weiteren Laminatlage umgeben sind, auf die Versteifungslage in die Fertigungsform derart, dass jede Hülse in einem Aufnahmebereich zwischen zwei länglichen Profilen angeordnet ist, so dass die weitere Laminatlage jeder Hülse mit der äußeren Laminatlage zumindest teilweise in Kontakt steht,
- Einlegen einer inneren Laminatlage des Flanschanschlusses in die Fertigungsform über die Hülsen, und
- Verbinden der eingelegten Komponenten derart fest, dass der Flanschanschluss gebildet ist,
wobei jedes längliche Profil (148) ausgehend von der äußeren Laminatlage (140) in Richtung der inneren Laminatlage (138) nicht über eine Ebene (154) hinausragt, die durch zwei Längsachsen zweier dem jeweiligen Profil (148) unmittelbar benachbarten Hülsen (142) aufgespannt wird.

Das beschriebene Verfahren wird vorteilhafter Weise mittels einer konkav ausgebildeten Fertigungsform ausgeführt.

Alternativ wird ein Verfahren offenbart, welches mittels einer konvex ausgebildeten Fertigungsform, einer sogenannten Positivablage, ausgeführt werden kann, und die Schritte aufweist:
- Auflegen einer inneren Laminatlage des Flanschanschlusses auf eine Fertigungsform für den Flanschanschluss,
- Auflegen einer Versteifungslage auf die innere Laminatlage auf die Fertigungsform, wobei die Versteifungslage durch einzelne, längliche Profile aus formstabilem Material gebildet ist, die entlang der inneren Laminatlage nebeneinander und beabstandet zueinander auf der inneren Laminatlage angeordnet sind, wobei jeweils zwei nebeneinander angeordnete längliche Profile einen Aufnahmebereich zwischen sich ausbilden,
- Auflegen von Hülsen mit Innengewinde, die jeweils von einer weiteren Laminatlage umgeben sind, auf die Versteifungslage auf die Fertigungsform derart, dass jede Hülse in einem Aufnahmebereich zwischen zwei länglichen Profilen angeordnet ist, so dass die weitere Laminatlage jeder Hülse mit der inneren Laminatlage zumindest teilweise in Kontakt steht,
- Auflegen einer äußeren Laminatlage des Flanschanschlusses auf die Fertigungsform über die Hülsen, und
- Verbinden der eingelegten Komponenten derart fest, dass der Flanschanschluss gebildet ist,
wobei jedes längliche Profil (148) ausgehend von der inneren Laminatlage (138) in Richtung der äußeren Laminatlage (140) nicht über eine Ebene (154) hinausragt, die durch zwei Längsachsen zweier dem jeweiligen Profil (148) unmittelbar benachbarten Hülsen (142) aufgespannt wird.

Die Verfahren ermöglichen im Wesentlichen die oben genannten Vorteile und Funktionen. Die einzelnen Komponenten können entsprechend obiger Ausführungen weitergebildet sein. Entsprechend können die Verfahren weitergebildet sein.

Weitere Vorteile, Merkmale und Weiterbildungen ergeben sich aus den nachfolgenden, in Verbindung mit den Figuren erläuterten Ausführungsbeispielen. Gleiche, gleichartige oder gleich wirkende Elemente sind in den Figuren mit den gleichen Bezugszeichen versehen. Aus Gründen der Übersichtlichkeit sind gegebenenfalls nicht alle dargestellten Elemente in sämtlichen Figuren mit zugehörigen Bezugszeichen gekennzeichnet.

In den Figuren zeigen:
Figur 1 eine schematische Darstellung einer Windenergieanlage gemäß einem Ausführungsbeispiel,
Figur 2 eine schematische Darstellung eines Rotorblatts der Windenergieanlage,
Figur 3 eine schematische Querschnittsdarstellung eines Flanscheinlegers mit einem Flanschanschluss gemäß einem Ausführungsbeispiel der Erfindung,
Figur 4 eine Detailansicht der Querschnittsdarstellung gemäß Figur 3,
Figur 5 eine schematische Querschnittsdarstellung eines Flanschanschlusses für ein Rotorblatt,
Figur 6 eine schematische Querschnittsdarstellung eines Flanschanschlusses gemäß einem weiteren Ausführungsbeispiel der Erfindung,
Figuren 7 und 8 schematische, perspektivische Ansichten einer Versteifungslage gemäß einem Ausführungsbeispiel der Erfindung, und
Figur 9 ein schematisches Ablaufdiagramm eines Verfahrens zum Herstellen eines Flanschanschlusses gemäß einem Ausführungsbeispiel der Erfindung.

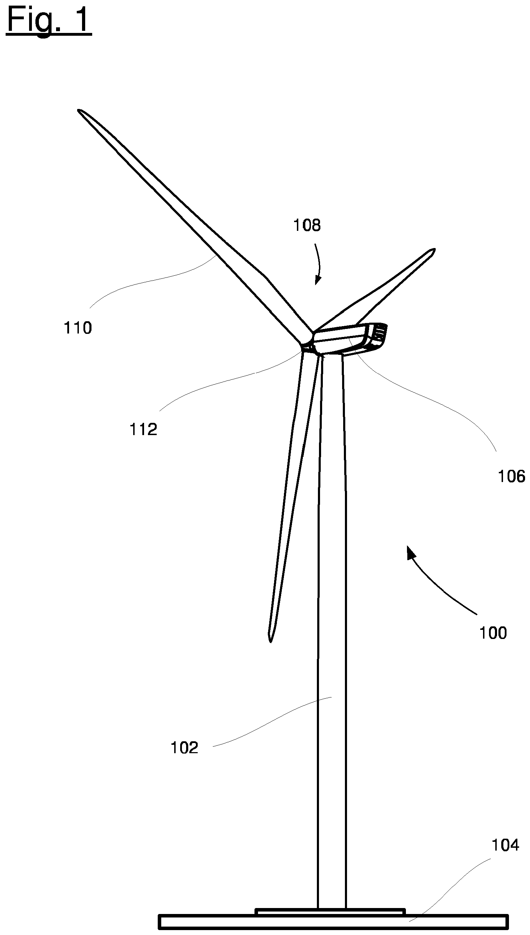

Figur 1 zeigt eine schematische Darstellung einer Windenergieanlage 100. Die Windenergieanlage 100 weist einen Turm 102 auf. Der Turm 102 ist mittels eines Fundaments 104 auf einem Untergrund befestigt. An einem dem Untergrund gegenüberliegenden Ende des Turms 102 ist eine Gondel 106 drehbar gelagert. Die Gondel 106 weist beispielsweise einen Generator auf, der über eine Rotorwelle (nicht gezeigt) mit einem Rotor 108 gekoppelt ist. Der Rotor 108 weist ein oder mehrere (Windenergieanlagen)Rotorblätter 110 auf, die an einer Rotornabe 112 angeordnet sind.

Der Rotor 108 wird im Betrieb durch eine Luftströmung, beispielsweise Wind, in Rotation versetzt. Diese Rotationsbewegung wird über die Rotorwelle und gegebenenfalls ein Getriebe auf den Generator übertragen. Der Generator wandelt die kinetische Energie des Rotors 108 in elektrische Energie um.

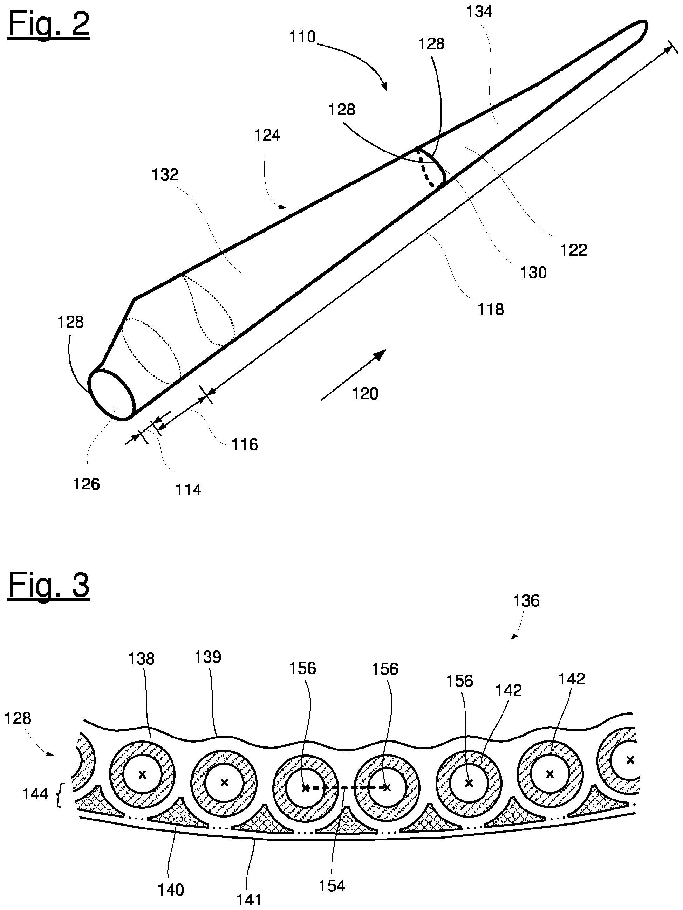

Figur 2 zeigt ein exemplarisches Windenergieanlagenrotorblatt 110. Das Rotorblatt 110 hat die Form eines herkömmlichen Rotorblattes und hat einen Rotorblattwurzelbereich 114, der der Rotornabe 112 zugewandt ist. Der Rotorblattwurzelbereich 114 hat typischerweise einen im Wesentlichen kreisrunden Querschnitt. An den Rotorblattwurzelbereich 114 schließen sich ein Übergangsbereich 116 und ein Profilbereich 118 des Rotorblatts 110 an. Das Rotorblatt 110 hat bezüglich einer Längserstreckungsrichtung 120 eine Druckseite 122 und eine gegenüberliegende Saugseite 124. Das Rotorblatt 110 ist im Inneren im Wesentlichen hohl ausgebildet.

Im Rotorblattwurzelbereich 114 ist ein Rotorblattanschluss 126 mit einem Flanschanschluss 128 vorgesehen, mittels welchem das Rotorblatt 110 mit einem Pitchlager oder einem Extender mechanisch verbunden wird.

Das Rotorblatt 110 weist eine Teilungsstelle 130 auf, an welcher ein blattwurzelseitiges Rotorblattsegment 132 und ein blattspitzenseitiges Rotorblattsegment 134 über ein oder mehrere Teilungsflansche miteinander verbunden sind, wobei zumindest ein Teilungsflansch einen Flanschanschluss 128 aufweist.

Zur Herstellung eines Flanschanschlusses 128 für den Rotorblattanschluss 126 und/oder den Teilungsflansch ist beispielsweise ein Flanscheinleger 136 vorgesehen, wie er in Figur 3 als ein Ausführungsbeispiel der Erfindung dargestellt ist. Figur 3 zeigt ein teilkreisförmiges Segment des Flanscheinlegers 136 in einer schematischen Querschnittsansicht. Der Flanscheinleger 136 weist den Flanschanschluss 128 auf und wird als Einlegeteil in eine Fertigungsform zur Herstellung des gesamten Rotorblattes 110 eingelegt. Der Aufbau umfasst eine innere Laminatlage 138 sowie eine äußere Laminatlage 140, die kreisbogenartig verlaufen und in welche in Längserstreckungsrichtung 120 Hülsen 142 mit einem Innengewinde eingebettet sind. Die innere Laminatlage 138 bildet eine innere Oberfläche 139 des Flanschanschlusses 128 und die äußere Laminatlage 140 eine äußere Oberfläche 141 des Flanschanschlusses 128. Die beiden Oberflächen können im bestimmungsgemäßen Einsatz auch Oberflächen des Rotorblatts 110 sein. Bei den Hülsen 142 handelt es sich beispielsweise um Stahlhülsen. Weiterhin ist in den Flanschanschluss 128 eine Versteifungslage 144 eingebettet. Diese und weitere Details des Flanschanschlusses 128 werden nachfolgend genauer beschrieben.

Es ist jedoch auch denkbar, dass kein Flanscheinleger 136 vorgesehen ist und die Hülsen 142 direkt in das Rotorblatt 110, etwa in Rotorblatthalbschalen, eingebettet und laminiert werden und den Flanschanschluss 128 bilden. Der Aufbau eines solchen Flanschanschlusses 128 ist analog.

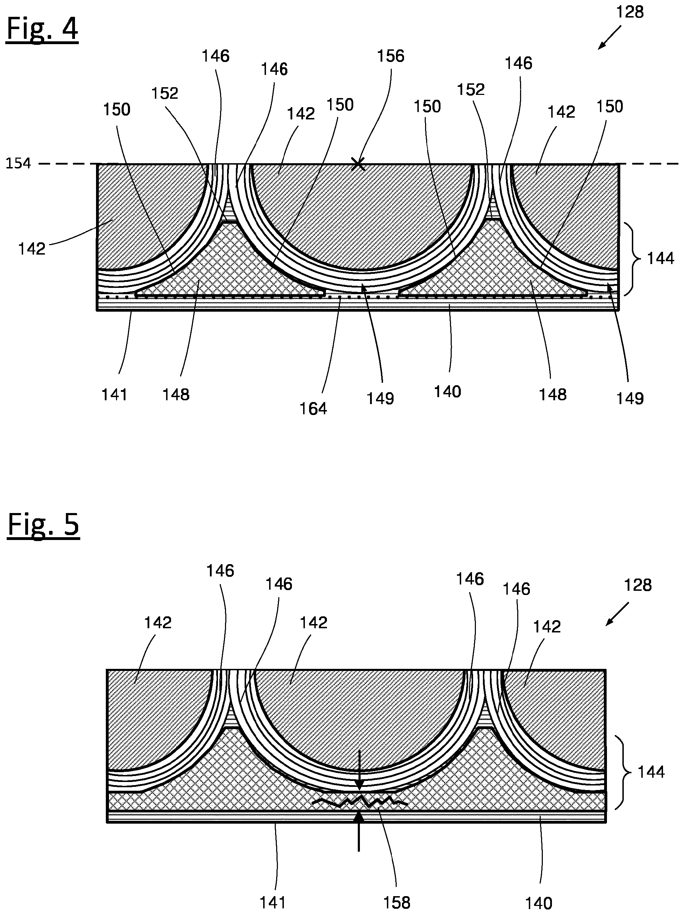

Figur 4 zeigt eine Detailansicht des Flanschanschlusses 128 gemäß Figur 3 in schematischem Querschnitt. Neben der äußeren Laminatlage 140 sind drei eingebettete Hülsen 142 zumindest teilweise dargestellt. Jede Hülse 142 des Flanschanschlusses 128 ist von einer weiteren Laminatlage 146 umgeben, die mehrfach um die Hülse gewickelt ist.

Die Versteifungslage 144 ist gemäß einer Ausführung der Erfindung durch einzelne, räumlich getrennte längliche Profile 148 gebildet, die jeweils aus Kernmaterial, also geschäumtem Kunststoff, gebildet sind. Die länglichen Profile 148 erstrecken sich in Längsrichtung 120. Die länglichen Profile 148, können für die Fertigung, müssen aber nicht zwingend über zusätzliche Verbindungsmittel 164 verbunden sein. Die länglichen Profile 148 sind im Wesentlichen dreiecksförmig ausgebildet und auf der äußeren Laminatlage 140 angeordnet. Jedes Profil ist zwischen zwei benachbarten Hülsen 142 angeordnet. Jeweils zwei benachbarte Profile 148 bilden zwischen sich einen Aufnahmebereich 149 aus, in welchen jeweils eine Hülse 142 zumindest teilweise aufgenommen ist. Die Profileseiten 150 der Profile 148, die den jeweils benachbarten Hülsen 142 zugewandt sind, sind in ihrer Formgebung an eine Formgebung der Hülsen 142 angepasst. Insbesondere sind diese Profilseiten 150 leicht konkav, also zu einer Mitte der Profile 148 bezogen auf den Querschnitt, gewölbt. Zudem sind die Profile 148 derart ausgebildet, dass eine Spitze 152 jedes Profils 148 ausgehend von der äußeren Laminatlage 140 in einem Abstand von einer Ebene 154 angeordnet ist, die durch Längsachsen 156 unmittelbar benachbarter Hülsen 142 aufgespannt wird (siehe auch Figur 3).

Dadurch ergeben sich die eingangs genannten Vorteile und Funktionen. Unter anderem können durch den beschriebenen Aufbau die weiteren Laminatlagen 146, welche die Hülsen 142 umgeben, zumindest teilweise zwischen zwei benachbarten Profilen 148 in Kontakt mit der äußeren Laminatlage 140 treten. Weiterhin können die weiteren Laminatlagen 146 zweier benachbarten Hülsen zumindest teilweise direkt in Kontakt stehen. Weiterhin wird zu einer besonders glatten und ebenen äußeren Oberfläche 141 beigetragen.

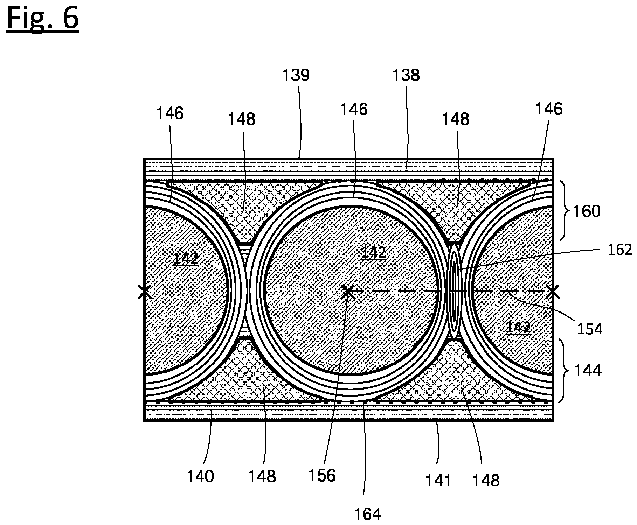

Ein weiterer Vorteil wird durch Vergleich mit einem ähnlich aufgebauten Flanschanschluss 128 gemäß Figur 5 deutlich. Bei diesem Flanschanschluss 128 ist die Versteifungslage 144 nicht durch einzelne Profile gebildet, sondern einstückig ausgebildet. Mit anderen Worten ist ein durchgehendes Versteifungslagenringsegment vorgesehen, das aus Kernmaterial bestehen kann. Dadurch kommt es in Dünnbereichen 158 der Versteifungslage 144, in welchen ein geringster Abstand zwischen einer Hülse 142 und der äußeren Laminatlage 140 vorherrscht, zu Problemstellen. In diesen Dünnbereichen 158 herrschen in einem bestimmungsgemäßen Betrieb eines Rotorblatts 110 mit dem Flanscheinleger 128 besonders hohe Schublasten (durch Pfeile gekennzeichnet), die zu Brüchen oder zum Reißen der Versteifungslage 144 in den Dünnbereichen 158 führen kann. Eine derartige Problematik ist bei der Ausführung nach Figuren 3 und 4 (und auch gemäß noch zu beschreibender Figur 6) vermieden.

Anstelle von Kernmaterial für die Profile 148 können auch andere Materialien verwendet werden. Beispielsweise können die Profile 148 aus pultrudierten Stäben gebildet sein.

Weiterhin kann die Form der Profile 148 auch variiert sein und muss nicht exakt der gezeigten Form in den Figuren entsprechen.

In einer nicht gezeigten Ausführungsform kann die Versteifungslage 144 gemäß dem Ausführungsbeispiel der Erfindung entsprechend der Figuren 3 und 4 auch an der inneren Laminatlage 138 angeordnet sein.

Figur 6 zeigt eine Detailansicht eines Flanschanschlusses 128 gemäß einem weiteren Ausführungsbeispiel der Erfindung. In diesem Fall ist neben einer Versteifungslage 144 noch eine weitere Versteifungslage 160 vorgesehen, die der Versteifungslage 144 entspricht. Dadurch sind sowohl an der inneren als auch äußeren Laminatlage 138 bzw. 140 Versteifungslagen mit Profilen 148 angeordnet. Es ergeben sich die genannten Vorteile und Funktionen, wobei trotz der Versteifungslagen 144 und 160 die weiteren Laminatlagen 146 der Hülsen 142 zwischen zwei entsprechend benachbarten Profilen 148 sowohl mit der inneren Laminatlage 138 als auch zwischen entsprechend benachbarten Profilen 148 mit der äußeren Laminatlage 140 zumindest teilweise in Kontakt stehen. Dies erhöht beispielsweise die Festigkeit/Biegesteifigkeit weiter und trägt zu einer geraden Oberfläche der inneren Oberfläche 139 bei.

Optional können auch eingangs erwähnte Abstandselemente 162 zwischen zwei benachbarten Hülsen 142 angeordnet sein, wobei eines in Figur 6 schematisch angedeutet ist.

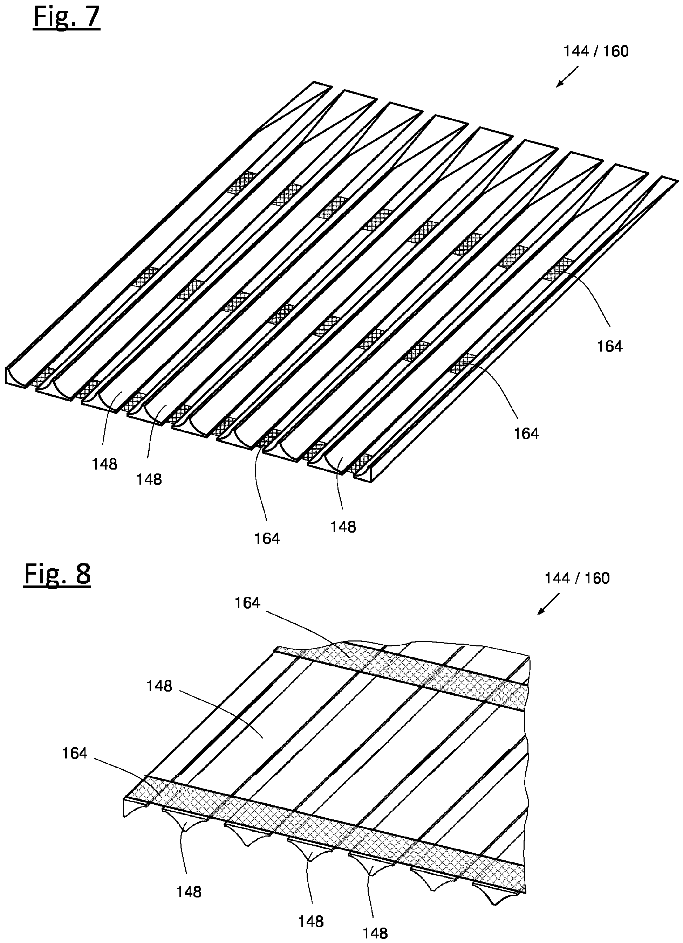

Figuren 7 und 8 zeigen in schematischen, perspektivischen Ansichten eine Versteifungslage 144 bzw. 160 gemäß einem Ausführungsbeispiel der Erfindung. Wie bereits erwähnt können die Profile 148 bei der Herstellung eines Flanschanschlusses 128 bzw. Rotorblatts 110, d.h. vor dem festen Verbund aller beteiligten Komponenten, einzeln verwendet werden, ohne untereinander direkt verbunden zu sein. Figuren 7 und 8 zeigen eine Ausführungsform, bei welcher die einzelnen Profile 148 untereinander mittels Verbindungsmittel 164 verbunden sind. Im Ausführungsbeispiel handelt es sich um Glasgitterklebeband, welches für einen Faserverbundaufbau geeignet ist und beispielsweise infundiert werden kann. Ein solches Verbindungsmittel 164 ist flexibel, so dass die Profile zueinander parallel zur Längserstreckungsrichtung 120 abgebogen oder verkippt werden können. Dies erleichtert die Herstellung besonders, da die Versteifungslage 144, 160 beim Einlegen dadurch an die Fertigungsform und bereits eingelegte Komponenten gut anpassbar ist. Wie eingangs erwähnt können die Verbindungsmittel 164 auch andere Ausgestaltungen annehmen, wobei sie steifer oder flexibel sein können. Mittels der zu einem "Kit" verbundenen Profile 148 wird zu einer vereinfachten Fertigung des Flanschanschlusses 128 beigetragen.

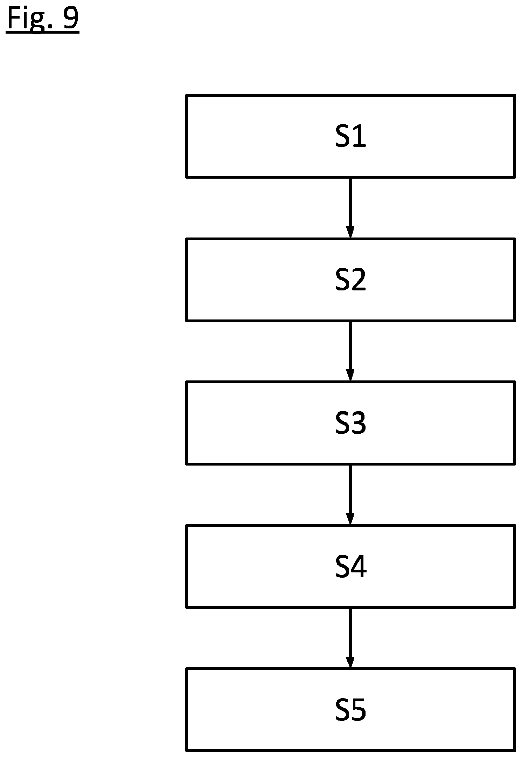

Figur 9 zeigt ein schematisches Ablaufdiagramm eines Verfahrens zum Herstellen eines Flanschanschlusses 128 eines Windenergieanlagenrotorblatts 110 gemäß Figuren 3 und 4. Das Verfahren setzt beispielsweise eine Fertigungsform voraus, die entsprechend bereitgestellt sein muss.

In einem ersten Schritt S1 wird die äußere Laminatlage 140 des Flanschanschlusses 128 in die Fertigungsform für den Flanschanschluss 128 eingelegt.

In einem nächsten Schritt S2 wird eine Versteifungslage 144 mit Profilen 148 auf die äußere Laminatlage 140 in die Fertigungsform eingelegt.

In einem nächsten Schritt S3 werden Hülsen 142 mit Innengewinde, die jeweils von einer weiteren Laminatlage 146 umgeben sind, auf die Versteifungslage 144 in die Fertigungsform eingelegt, wobei jede Hülse 142 in einem Aufnahmebereich 149 zwischen zwei benachbarten länglichen Profilen 148 angeordnet ist, so dass die weitere Laminatlage 146 jeder Hülse 142 mit der äußeren Laminatlage 140 zumindest teilweise in Kontakt steht.

In einem nächsten Schritt S4 wird die innere Laminatlage 138 des Flanschanschlusses 128 in die Fertigungsform über die Hülsen 142 eingelegt.

In einem nächsten Schritt S5 werden die eingelegten Komponenten derart fest verbunden, dass der Flanschanschluss 128 gebildet ist. Dabei können typische Faserbundherstellungsverfahren, etwa ein Vakuuminfusionsverfahren, zum Einsatz kommen.

Analog erfolgt die Herstellung eines Flanschanschlusses 128, bei welchem die Versteifungslage 144 auf der inneren Laminatlage 138 angeordnet ist. Mithilfe einer entsprechenden Fertigungsform (Positivablage) sind dabei die Schritte S1 und S4 des oben beschriebenen Verfahrens vertauscht.

Ähnlich erfolgt die Herstellung eines Flanschanschlusses 128 gemäß Figur 6, welcher zwei Versteifungslagen 144 und 160 aufweist. In diesem Fall wird die weitere Versteifungslage 160 vor Einlegen der äußeren bzw. inneren Laminatlage 138, 140 eingelegt.

### BEZUGSZEICHENLISTE

- 100: Windenergieanlage
- 102: Turm
- 104: Fundament
- 106: Gondel
- 108: Rotor
- 110: Rotorblatt, Windenergieanlagenrotorblatt
- 112: Rotornabe
- 114: Rotorblattwurzelbereich
- 116: Übergangsbereich
- 118: Profilbereich
- 120: Längserstreckungsrichtung
- 122: Druckseite
- 124: Saugseite
- 126: Rotorblattanschluss
- 128: Flanschanschluss
- 130: Teilungsstelle
- 132: blattwurzelseitiges Rotorblattsegment
- 134: blattspitzenseitiges Rotorblattsegment
- 136: Flanscheinleger
- 138: innere Laminatlage
- 139: innere Oberfläche
- 140: äußere Laminatlage
- 141: äußere Oberfläche
- 142: Hülse
- 144: Versteifungslage
- 146: weitere Laminatlage
- 148: längliches Profil
- 149: Aufnahmebereich
- 150: Profilseite
- 152: Spitze
- 154: Ebene
- 156: Längsachse
- 158: Dünnbereich
- 160: weitere Versteifungslage
- 162: Abstandselement
- 164: Verbindungsmittel

## Patentansprüche

1. Flanschanschluss (128) für ein Windenergieanlagenrotorblatt (110), aufweisend
- eine äußere Laminatlage (140), welche eine äußere Oberfläche (141) des Flanschanschlusses (128) ausbildet,
- eine innere Laminatlage (138), welche eine innere Oberfläche (139) des Flanschanschlusses (128) ausbildet,
- eine zwischen der äußeren und der inneren Laminatlage (138, 140) angeordnete Versteifungslage (144), wobei
-- die Versteifungslage (144) durch einzelne, längliche Profile (148) aus einem formstabilen Material gebildet ist, die entlang der äußeren Laminatlage (140) nebeneinander und beabstandet zueinander an der äußeren Laminatlage (140) angeordnet sind,
-- jeweils zwei nebeneinander angeordnete längliche Profile (148) einen Aufnahmebereich (149) zwischen sich ausbilden,
- mehrere Hülsen (142) mit Innengewinde, die jeweils von einer weiteren Laminatlage (146) umgeben sind, wobei jede Hülse (142) in einem Aufnahmebereich (149) zwischen zwei länglichen Profilen (148) angeordnet ist, so dass die weitere Laminatlage (146) jeder Hülse (142) mit der äußeren Laminatlage (140) zumindest teilweise in Kontakt steht,
- wobei jedes längliche Profil (148) ausgehend von der äußeren Laminatlage (140) in Richtung der inneren Laminatlage (138) oder ausgehend von der inneren Laminatlage (138) in Richtung der äußeren Laminatlage (140) jeweils nicht über eine Ebene (154) hinausragt, die durch zwei Längsachsen zweier dem jeweiligen Profil (148) unmittelbar benachbarten Hülsen (142) aufgespannt wird.

2. Flanschanschluss (128) nach Anspruch 1, wobei die weiteren Laminatlagen (146) zweier benachbarter Hülsen (142) miteinander in Kontakt stehen.

3. Flanschanschluss (128) nach Anspruch 1, wobei zwischen zwei benachbarten Hülsen (142) ein Abstandselement (162) angeordnet ist.

4. Flanschanschluss (128) nach einem der vorhergehenden Ansprüche, wobei jedes längliche Profil (148) im Wesentlichen dreiecksförmig ausgebildet ist.

5. Flanschanschluss (128) nach Anspruch 4, wobei die einer Hülse (142) zugewandten Seiten (150) jedes länglichen Profils (148) gewölbt und damit einer Formgebung der entsprechenden Hülsen (142) mit umgebender weiterer Laminatlage (146) angepasst sind.

6. Flanschanschluss (128) nach einem der vorhergehenden Ansprüche, wobei
-- zwischen der inneren und der äußeren Laminatlage (138, 140) eine weitere Versteifungslage (160) vorgesehen ist, die durch einzelne, längliche Profile (148) aus formstabilem Material gebildet ist,
-- die länglichen Profile (148) entlang der jeweils anderen von innerer oder äußerer Laminatlage (138, 140) nebeneinander und beabstandet zueinander an der inneren bzw. äußeren Laminatlage (138, 140) angeordnet sind,
-- jeweils zwei nebeneinander angeordnete längliche Profile (148) der weiteren Versteifungslage (160) einen Aufnahmebereich (149) zwischen sich ausbilden, und
-- jede Hülse (142) in einem Aufnahmebereich (149) zwischen zwei länglichen Profilen (148) der weiteren Versteifungslage (160) angeordnet ist, so dass die weitere Laminatlage (146) jeder Hülse (142) mit der inneren bzw. äußeren Laminatlage (138, 140) zumindest teilweise in Kontakt steht.

7. Flanschanschluss (128) nach einem der vorhergehenden Ansprüche, wobei die länglichen Profile (148) der Versteifungslage (144) und/oder der weiteren Versteifungslage (160) mittels ein oder mehrerer Verbindungsmittel (164), die ein zu dem länglichen Profil (148) unterschiedliches Material aufweisen können, miteinander verbunden, insbesondere flexibel verbunden, sind.

8. Flanscheinleger (136) für ein Windenergieanlagenrotorblatt (110), aufweisend einen Flanschanschluss (128) nach einem der vorhergehenden Ansprüche.

9. Windenergieanlagenrotorblatt (110), aufweisend einen Rotorblattanschluss (126) mit einem Flanschanschluss (128) nach einem der Ansprüche 1 bis 7.

10. Windenergieanlagenrotorblatt (110), aufweisend ein Rotorblattsegment (132, 134) mit einem Flanschanschluss (128) nach einem der Ansprüche 1 bis 7.

11. Windenergieanlage (100), aufweisend
einen Rotor (108) mit einem oder mehreren Windenergieanlagenrotorblättern (110) nach einem der Ansprüche 9 oder 10.

12. Verfahren zum Herstellen eines Flanschanschlusses (128) eines Windenergieanlagenrotorblatts (110), aufweisend die Schritte:
- Einlegen einer äußeren Laminatlage (140) des Flanschanschlusses (128) in eine Fertigungsform für den Flanschanschluss (128),
- Einlegen einer Versteifungslage (144) auf die äußere Laminatlage (140) in die Fertigungsform, wobei die Versteifungslage (144) durch einzelne, längliche Profile (148) aus formstabilem Material gebildet ist, die entlang der äußeren Laminatlage (140) nebeneinander und beabstandet zueinander auf der äußeren Laminatlage (140) angeordnet sind, wobei jeweils zwei nebeneinander angeordnete längliche Profile (148) einen Aufnahmebereich (149) zwischen sich ausbilden,
- Einlegen von Hülsen (142) mit Innengewinde, die jeweils von einer weiteren Laminatlage (146) umgeben sind, auf die Versteifungslage (144) in die Fertigungsform derart, dass jede Hülse (142) in einem Aufnahmebereich (149) zwischen zwei länglichen Profilen (148) angeordnet ist, so dass die weitere Laminatlage (146) jeder Hülse (142) mit der äußeren Laminatlage (140) zumindest teilweise in Kontakt steht,
- Einlegen einer inneren Laminatlage (138) des Flanschanschlusses (128) in die Fertigungsform über die Hülsen (142), und
- Verbinden der eingelegten Komponenten derart fest, dass der Flanschanschluss (128) gebildet ist,
wobei jedes längliche Profil (148) ausgehend von der äußeren Laminatlage (140) in Richtung der inneren Laminatlage (138) nicht über eine Ebene (154) hinausragt, die durch zwei Längsachsen zweier dem jeweiligen Profil (148) unmittelbar benachbarten Hülsen (142) aufgespannt wird.

13. Verfahren zum Herstellen eines Flanschanschlusses (128) eines Windenergieanlagenrotorblatts (110), aufweisend die Schritte:
- Auflegen einer inneren Laminatlage (138) des Flanschanschlusses (128) auf eine Fertigungsform für den Flanschanschluss (128),
- Auflegen einer Versteifungslage (144) auf die innere Laminatlage (138) auf die Fertigungsform, wobei die Versteifungslage (144) durch einzelne, längliche Profile (148) aus formstabilem Material gebildet ist, die entlang der inneren Laminatlage (138) nebeneinander und beabstandet zueinander auf der inneren Laminatlage (138) angeordnet sind, wobei jeweils zwei nebeneinander angeordnete längliche Profile (148) einen Aufnahmebereich (149) zwischen sich ausbilden,
- Auflegen von Hülsen (142) mit Innengewinde, die jeweils von einer weiteren Laminatlage (146) umgeben sind, auf die Versteifungslage (144) auf der Fertigungsform derart, dass jede Hülse (142) in einem Aufnahmebereich (149) zwischen zwei länglichen Profilen (148) angeordnet ist, so dass die weitere Laminatlage (146) jeder Hülse (142) mit der inneren Laminatlage (138) zumindest teilweise in Kontakt steht,
- Auflegen einer äußeren Laminatlage (140) des Flanschanschlusses (128) auf die Fertigungsform über die Hülsen (142), und
- Verbinden der eingelegten Komponenten derart fest, dass der Flanschanschluss (128) gebildet ist,
wobei jedes längliche Profil (148) ausgehend von der inneren Laminatlage (138) in Richtung der äußeren Laminatlage (140) nicht über eine Ebene (154) hinausragt, die durch zwei Längsachsen zweier dem jeweiligen Profil (148) unmittelbar benachbarten Hülsen (142) aufgespannt wird.

## Claims

1. A flange connection (128) for a wind turbine rotor blade (110), comprising
- an external laminate layer (140) which forms an external surface (141) of the flange connection (128),
- an internal laminate layer (138) which forms an internal surface (139) of the flange connection (128),
- a stiffening layer (144) arranged between the external and the internal laminate layers (138, 140), wherein
-- the stiffening layer (144) is formed by individual elongated profiles (148) made of a dimensionally stable material, which are arranged along the external laminate layer (140) next to one another and at a distance from one another on the external laminate layer (140),
-- two elongated profiles (148) arranged next to one another each form a receiving region (149) between them,
- multiple bushings (142) having an internal thread, which are each enclosed by a further laminate layer (146), wherein each bushing (142) is arranged in a receiving region (149) between two elongated profiles (148) such that the further laminate layer (146) of each bushing (142) is at least partially in contact with the external laminate layer (140),
- wherein each elongated profile (148), starting from the external laminate layer (140) in the direction of the internal laminate layer (138) or respectively from the internal laminate layer (138) in the direction of the external laminate layer (140), does not protrude beyond a plane (154) which is spanned by two longitudinal axes of two bushings (142) immediately adjacent to the respective profile (148).

2. The flange connection (128) according to claim 1, wherein the further laminate layers (146) of two adjacent bushings (142) are in contact with one another.

3. The flange connection (128) according to claim 1, wherein a spacer element (162) is arranged between two adjacent bushings (142).

4. The flange connection (128) according to any one of the preceding claims, wherein each elongated profile (148) is substantially formed in the shape of a triangle.

5. The flange connection (128) according to claim 4, wherein the sides (150) of each elongated profile (148) facing a bushing (142) are curved and are therefore adapted to a shape of the appropriate bushings (142) having an enclosing further laminate layer (146).

6. The flange connection (128) according to any one of the preceding claims, wherein
-- a further stiffening layer (160) is provided between the internal and the external laminate layers (138, 140), which is formed by individual elongated profiles (148) made of dimensionally stable material,
-- the elongated profiles (148) are arranged along the respectively other of the internal or external laminate layer (138, 140) next to one another and at a distance from one another on the internal or respectively external laminate layer (138, 140),
-- two elongated profiles (148) of the further stiffening layer (160) arranged next to one another each form a receiving region (149) between them, and
-- each bushing (142) is arranged in a receiving region (149) between two elongated profiles (148) of the further stiffening layer (160) such that the further laminate layer (146) of each bushing (142) is at least partially in contact with the internal or respectively external laminate layer (138, 140).

7. The flange connection (128) according to any one of the preceding claims, wherein the elongated profiles (148) of the stiffening layer (144) and/or of the further stiffening layer (160) are connected to one another, in particular flexibly connected to one another, by means of one or more connecting means (164) which can comprise a different material to the elongated profile (148).

8. A flange insert (136) for a wind turbine rotor blade (110), comprising a flange connection (128) according to any one of the preceding claims.

9. A wind turbine rotor blade (110), comprising a rotor blade attachment (126) having a flange connection (128) according to any one of the claims 1 to 7.

10. A wind turbine rotor blade (110), comprising a rotor blade segment (132, 134) having a flange connection (128) according to any one of the claims 1 to 7.

11. A wind turbine (100), comprising a rotor (108) having one or more wind turbine rotor blades (110) according to any one of claims 9 or 10.

12. A method for producing a flange connection (128) of a wind turbine rotor blade (110), comprising the steps of:
- inserting an external laminate layer (140) of the flange connection (128) into a fabrication mold for the flange connection (128),
- inserting a stiffening layer (144) onto the external laminate layer (140) in the fabrication mold, wherein the stiffening layer (144) is formed by individual elongated profiles (148) made of dimensionally stable material, which are arranged along the external laminate layer (140) next to one another and at a distance from one another on the external laminate layer (140), wherein two elongated profiles (148) arranged next to one another each form a receiving region (149) between them,
- inserting bushings (142) having an internal thread, which are each enclosed by a further laminate layer (146), onto the stiffening layer (144) in the fabrication mold in such a way that each bushing (142) is arranged in a receiving region (149) between two elongated profiles (148) such that the further laminate layer (146) of each bushing (142) is at least partially in contact with the external laminate layer (140),
- inserting an internal laminate layer (138) of the flange connection (128) into the fabrication mold by way of the bushings (142), and
- fixedly connecting the inserted component parts in such a way that the flange connection (128) is formed,
wherein each elongated profile (148), starting from the external laminate layer (140) in the direction of the internal laminate layer (138) or respectively from the internal laminate layer (138) in the direction of the external laminate layer (140), does not protrude beyond a plane (154) which is spanned by two longitudinal axes of two bushings (142) immediately adjacent to the respective profile (148).

13. A method for producing a flange connection (128) of a wind turbine rotor blade (110), comprising the steps of:
- applying an internal laminate layer (138) of the flange connection (128) to a fabrication mold for the flange connection (128),
- applying a stiffening layer (144) to the internal laminate layer (138) on the fabrication mold, wherein the stiffening layer (144) is formed by individual elongated profiles (148) made of dimensionally stable material, which are arranged along the internal laminate layer (138) next to one another and at a distance from one another on the internal laminate layer (138), wherein two elongated profiles (148) arranged next to one another each form a receiving region (149) between them,
- applying bushings (142) having an internal thread, which are each enclosed by a further laminate layer (146), to the stiffening layer (144) on the fabrication mold in such a way that each bushing (142) is arranged in a receiving region (149) between two elongated profiles (148) such that the further laminate layer (146) of each bushing (142) is at least partially in contact with the internal laminate layer (138),
- applying an external laminate layer (140) of the flange connection (128) to the fabrication mold by way of the bushings (142), and
- fixedly connecting the inserted component parts in such a way that the flange connection (128) is formed,
wherein each elongated profile (148), starting from the external laminate layer (140) in the direction of the internal laminate layer (138) or respectively from the internal laminate layer (138) in the direction of the external laminate layer (140), does not protrude beyond a plane (154) which is spanned by two longitudinal axes of two bushings (142) immediately adjacent to the respective profile (148).

## Revendications

1. Raccord à bride (128) pour une pale de rotor d'éolienne (110), présentant
- une couche stratifiée extérieure (140), laquelle constitue une surface extérieure (141) du raccord à bride (128),
- une couche stratifiée intérieure (138), laquelle constitue une surface intérieure (139) du raccord à bride (128),
- une couche de raidissement (144) disposée entre les couches stratifiées extérieure et intérieure (138, 140), sachant que
o la couche de raidissement (144) est formée par des profilés (148) allongés individuels en matériau indéformable qui sont disposés le long de la couche stratifiée extérieure (140) les uns à côté des autres et de manière espacée les uns des autres au niveau de la couche stratifiée extérieure (140),
o respectivement deux profilés (148) allongés disposés l'un à côté de l'autre constituent une zone de réception (149) entre eux,
- plusieurs douilles (142) à filetage intérieur qui sont entourées respectivement par une couche stratifiée (146) supplémentaire, sachant que chaque douille (142) est disposée dans une zone de réception (149) entre deux profilés (148) allongés de telle sorte que la couche stratifiée (146) supplémentaire de chaque douille (142) soit au moins partiellement en contact avec la couche stratifiée extérieure (140),
- sachant que chaque profilé (148) allongé, en partant de la couche stratifiée extérieure (140) en direction de la couche stratifiée intérieure (138) ou en partant de la couche stratifiée intérieure (138) en direction de la couche stratifiée extérieure (140), ne dépasse respectivement pas au-dessus d'un plan (154) qui est tendu par deux axes longitudinaux de deux douilles (142) directement adjacentes au profilé (148) respectif.

2. Raccord à bride (128) selon la revendication 1, sachant que les couches stratifiées (146) supplémentaires de deux douilles (142) adjacentes sont en contact l'une avec l'autre.

3. Raccord à bride (128) selon la revendication 1, sachant qu'une entretoise (162) est disposée entre deux douilles (142) adjacentes.

4. Raccord à bride (128) selon l'une des revendications précédentes, sachant que chaque profilé (148) allongé est constitué sensiblement en forme de triangle.

5. Raccord à bride (128) selon la revendication 4, sachant que les côtés (150) tournés vers une douille (142) de chaque profilé (148) allongé sont bombés et donc adaptés à une mise en forme des douilles (142) correspondantes avec la couche stratifiée (146) supplémentaire qui les entoure.

6. Raccord à bride (128) selon l'une des revendications précédentes, sachant que
- une couche de raidissement (160) supplémentaire qui est formée par des profilés (148) allongés individuels en matériau indéformable est prévue entre les couches stratifiées intérieure et extérieure (138, 140),
- les profilés (148) allongés sont disposés le long de respectivement l'autre des couches stratifiées intérieure ou extérieure (138, 140) les uns à côté des autres et de manière espacée les uns des autres au niveau de la couche stratifiée intérieure ou extérieure (138, 140),
- respectivement deux profilés (148) allongés disposés l'un à côté de l'autre de la couche de raidissement (160) supplémentaire constituent une zone de réception (149) entre eux, et
- chaque douille (142) est disposée dans une zone de réception (149) entre deux profilés (148) allongés de la couche de raidissement (160) supplémentaire de telle sorte que la couche stratifiée (146) supplémentaire de chaque douille (142) soit au moins partiellement en contact avec la couche stratifiée intérieure ou extérieure (138, 140).

7. Raccord à bride (128) selon l'une des revendications précédentes, sachant que les profilés (148) allongés de la couche de raidissement (144) et/ou de la couche de raidissement (160) supplémentaire sont reliés, en particulier reliés de manière flexible, les uns aux autres moyennant un ou plusieurs moyens de liaison (164) pouvant présenter un matériau différent par rapport au profilé (148) allongé.

8. Insert de bride (136) pour une pale de rotor d'éolienne (110), présentant un raccord à bride (128) selon l'une des revendications précédentes.

9. Pale de rotor d'éolienne (110), présentant un raccord de pale de rotor (126) avec un raccord à bride (128) selon l'une des revendications 1 à 7.

10. Pale de rotor d'éolienne (110), présentant un segment de pale de rotor (132, 134) avec un raccord à bride (128) selon l'une des revendications 1 à 7.

11. Éolienne (100), présentant
un rotor (108) avec une ou plusieurs pales de rotor d'éolienne (110) selon l'une des revendications 9 ou 10.

12. Procédé de fabrication d'un raccord à bride (128) d'une pale de rotor d'éolienne (110), présentant les étapes :
- insertion d'une couche stratifiée extérieure (140) du raccord à bride (128) dans un moule de fabrication pour le raccord à bride (128),
- insertion d'une couche de raidissement (144) sur la couche stratifiée extérieure (140) dans le moule de fabrication, sachant que la couche de raidissement (144) est formée par des profilés (148) allongés individuels en matériau indéformable qui sont disposés le long de la couche stratifiée extérieure (140) les uns à côté des autres et de manière espacée les uns des autres sur la couche stratifiée extérieure (140), sachant que respectivement deux profilés (148) allongés disposés l'un à côté de l'autre constituent une zone de réception (149) entre eux,
- insertion de douilles (142) à filetage intérieur, qui sont entourées respectivement par une couche stratifiée (146) supplémentaire, sur la couche de raidissement (144) dans le moule de fabrication de telle manière que chaque douille (142) soit disposée dans une zone de réception (149) entre deux profilés (148) allongés de telle sorte que la couche stratifiée (146) supplémentaire de chaque douille (142) soit au moins partiellement en contact avec la couche stratifiée extérieure (140),
- insertion d'une couche stratifiée intérieure (138) du raccord à bride (128) dans le moule de fabrication au-dessus des douilles (142), et
- liaison des composants insérés de manière ferme telle que le raccord à bride (128) soit formé,
sachant que chaque profilé (148) allongé, en partant de la couche stratifiée extérieure (140) en direction de la couche stratifiée intérieure (138), ne dépasse pas au-dessus d'un plan (154) qui est tendu par deux axes longitudinaux de deux douilles (142) directement adjacentes au profilé (148) respectif.

13. Procédé de fabrication d'un raccord à bride (128) d'une pale de rotor d'éolienne (110), présentant les étapes :
- pose d'une couche stratifiée intérieure (138) du raccord à bride (128) sur un moule de fabrication pour le raccord à bride (128),
- pose d'une couche de raidissement (144) sur la couche stratifiée intérieure (138) sur le moule de fabrication, sachant que la couche de raidissement (144) est formée par des profilés (148) allongés individuels en matériau indéformable qui sont disposés le long de la couche stratifiée intérieure (138) les uns à côté des autres et de manière espacée les uns des autres sur la couche stratifiée intérieure (138), sachant que respectivement deux profilés (148) allongés disposés l'un à côté de l'autre constituent une zone de réception (149) entre eux,
- pose de douilles (142) à filetage intérieur qui sont entourées respectivement par une couche stratifiée (146) supplémentaire sur la couche de raidissement (144) sur le moule de fabrication de telle manière que chaque douille (142) soit disposée dans une zone de réception (149) entre deux profilés (148) allongés de telle sorte que la couche stratifiée (146) supplémentaire de chaque douille (142) soit au moins partiellement en contact avec la couche stratifiée intérieure (138),
- pose d'une couche stratifiée extérieure (140) du raccord à bride (128) sur le moule de fabrication au-dessus des douilles (142), et
- liaison des composants insérés de manière ferme telle que le raccord à bride (128) soit formé,
sachant que chaque profilé (148) allongé, en partant de la couche stratifiée intérieure (138) en direction de la couche stratifiée extérieure (140), ne dépasse pas au-dessus d'un plan (154) qui est tendu par deux axes longitudinaux de deux douilles (142) directement adjacentes au profilé (148) respectif.
